# EUROPEAN PATENT APPLICATION

(11) **EP 3 051 393 A1**
(43) Date of publication of application: **03.08.2016**
(21) Application number: 14868308.9
(22) Date of filing: 19.11.2014
(51) Int. Cl.: G06F 3/041

(54) **TOUCH SENSING STRUCTURE OF ELECTRONIC DEVICE**

(30) Priority: 04.12.2013 KR 20130150128; 06.11.2014 KR 20140153639
(71) Applicant: Yang, Heui Bong, Gumi-si, Gyeongsangbuk-do 730-750 (KR)
(72) Inventor: Yang, Heui Bong, Gumi-si, Gyeongsangbuk-do 730-750 (KR)
(74) Representative: Caspary, Karsten
(86) International application number: PCT/KR2014/011133
(87) International publication number: WO 2015/083959

(57) **Abstract**

The present invention relates to a touch sense structure of an electronic device including: a first layer formed of an insulation material; a first electrode line formed as a metal mesh on one side of the first layer; a plurality of first sub-electrode lines formed as a metal mesh around the first electrode line; and a first optical transparent adhesive layer.

## Description

### BACKGROUND OF THE INVENTION

### Field of the Invention

The present invention relates to a touch sense structure of an electronic device, and more specifically, to a touch sense structure, which includes a plurality of electrode lines formed as a metal mesh and a transparent adhesive layer so that one side of the electronic device may sense touch input information.

### Background of the Related Art

A conventional technique for sensing touch input information is mainly used only in the display field such as a touch screen or the like, and a technique for forming an electrode pattern which can be applied on one side of a general electronic device, rather than a display device, is not studied much. Furthermore, although it is confined only to the display field, a further slim appearance is difficult to implement (e.g., TSP or the like of a GFF, GG or GFM method) in the conventional technique since a touch screen panel (TSP) is configured in a form including a plurality of glass layers or film layers, and although a TSP is configured in a form using only a single glass layer in order to implement a slim appearance, an appearance of a large area is difficult to implement since electrode patterns are formed of ITO.

Accordingly, a new 'technique for forming electrodes of an electronic device' is needed, which can be implemented on one side of a transparent material or on one side of an opaque material of a general electronic device other than a display device, remarkably improve sensing sensitivity compared with a conventional technique even when the technique is implemented in the display device, and implement a further slim appearance of the device.

### SUMMARY OF THE INVENTION

Therefore, the present invention has been made in view of the above problems, and it is an object of the present invention to implement a technique which can be implemented on one side of a variety of electronic devices including a transparent material or an opaque material to sense touch input information on one side of a corresponding electronic device and sense a fingerprint of a user under a predetermined condition.

The technical problems to be solved in the present invention are not limited to those mentioned above, and various technical problems can be included within the scope apparent to those skilled in the art from the following descriptions.

To accomplish the above object, according to one aspect of the present invention, there is provided a touch sense structure of an electronic device, the structure including: a first layer formed of an insulation material; a first electrode line formed as a metal mesh on one side of the first layer; a plurality of first sub-electrode lines formed as a metal mesh around the first electrode line; and a first optical transparent adhesive layer.

In addition, the touch sense structure may further include: a second electrode line formed as a metal mesh on a side the same as that of the first electrode line to form a cross structure while being electrically separated from the first electrode line; and a plurality of second sub-electrode lines formed as a metal mesh around the second electrode line, in which the plurality of first sub-electrode lines and the plurality of second sub-electrode lines may be formed in a plurality of areas partitioned by the first electrode line and the second electrode line.

In addition, the first sub-electrode lines and the second sub-electrode lines formed in a same area among the plurality of areas may be respectively connected only to any one of the first electrode line and the second electrode line, and the first sub-electrode lines and the second sub-electrode lines formed in areas facing each other among the plurality of areas may be connected only to an electrode line of a same type.

In addition, a discontinuation area for electrically separating the first electrode line and the second electrode line may be formed at a cross point where the first electrode line and the second electrode line cross each other, and any one of the first electrode line and the second electrode line may be connected through a connection pattern after being discontinued in the discontinuation area.

In addition, the touch sense structure may further include an insulation layer for insulating the connection pattern from the electrode lines non-discontinued in the discontinuation area, in which the insulation layer may include any one or more of an insulation pattern applied in the length direction of the electrode line, an insulation pattern applied in a circular shape, an insulation pattern applied in an oval shape, an insulation pattern applied in an arch shape, an insulation pattern formed like a film, and an insulation pattern formed like a film with a via hole.

In addition, the layer may be formed of a transparent material to transmit light of the light emitting unit, and the first electrode line and the second electrode line may be formed in a shape declined by a predetermined angle compared with an outer rim of the light emitting unit, in which an acute angle formed between the first electrode line or the second electrode line and the outer rim of the light emitting unit may be 25 to 65 degrees. In addition, a line connecting a plurality of cross points formed by the plurality of first electrode lines and the plurality of second electrode lines may be formed in a shape perpendicular to the outer rim of the light emitting unit or declined within a range of 0 to 20 degrees from a perpendicular line.

In addition, a shape of the first electrode line or the second electrode line may include one or more of a diamond shape, a square shape and a rectangular shape based on the shape of the pattern of the light emitting unit, and the first electrode line, the second electrode line, the first sub-electrode lines and the second sub-electrode lines may be formed to have a width of 5 µm or less.

In addition, the touch sense structure may further include a touch controller connected to the first electrode line and the second electrode line to control a touch signal. At this point, when the first electrode line, the second electrode line, the first sub-electrode lines and the second sub-electrode lines sense a touch signal for a predetermined time period or more, the touch controller may recognize that a user uses a fingerprint recognition device and display a notification window inquiring whether or not to use a fingerprint recognition program, and when a command for using the fingerprint recognition program is input, the touch controller may confirm a fingerprint pattern of the user by analyzing touch signal recognition patterns of the plurality of first electrode lines, the plurality of second electrode lines, and the plurality of sub-electrode lines.

Meanwhile, the touch sense structure may further include: a second layer formed of an insulation material; a third electrode line formed as a metal mesh on one side of the second layer; a plurality of third sub-electrode lines formed as a metal mesh around the third electrode line; and a second optical transparent adhesive layer.

In addition, the first layer and the second layer may be formed of a transparent material to transmit light of the light emitting unit, and the first electrode line and the third electrode line may be formed in a shape declined by a predetermined angle compared with an outer rim of the light emitting unit, in which an acute angle formed between the first electrode line or the third electrode line and the outer rim of the light emitting unit may be 25 to 65 degrees. In addition, the first electrode line and the third electrode line are included in plurality, in which a line connecting a plurality of cross points formed by the plurality of first electrode lines and the plurality of third electrode lines may be formed in a shape perpendicular to the outer rim of the light emitting unit or declined within a range of 0 to 20 degrees from a perpendicular line.

In addition, a shape of the first electrode line or the third electrode line may include one or more of a diamond shape, a square shape and a rectangular shape based on a shape of a pattern of the light emitting unit, and the first electrode line, the third electrode line, the first sub-electrode lines and the third sub-electrode lines may be formed to have a width of 5µm or less.

In addition, the touch sense structure may further include a touch controller connected to the first electrode line and the third electrode line to control a touch signal. At this point, when the first electrode line, the third electrode line and the sub-electrode lines sense a touch signal for a predetermined time period or more, the touch controller may recognize that a user uses a fingerprint recognition device and display a notification window inquiring whether or not to use a fingerprint recognition program, and when a command for using the fingerprint recognition program is input, the touch controller may confirm a fingerprint pattern of the user by analyzing touch signal recognition patterns of the plurality of first electrode lines, the plurality of third electrode lines, and the plurality of sub-electrode lines.

In addition, the touch sense structure may include: a second layer formed of an insulation material; a fourth electrode line formed as an electrode including one or more of Indium Tin Oxide (ITO) and a sliver nanowire on one side of the second layer; and a second optical transparent adhesive layer.

Meanwhile, according to another aspect of the present invention, there is provided an electronic device including: a first layer formed of an insulation material; a first electrode line formed as a metal mesh on one side of the first layer; a plurality of first sub-electrode lines formed as a metal mesh around the first electrode line; and a first optical transparent adhesive layer.

Meanwhile, according to still another aspect of the present invention, there is provided a method of forming an electrode in an electronic device, the method including the steps of: (a) forming a first layer formed of an insulation material; (b) forming a first electrode line as a metal mesh on one side of the first layer; (c) forming a plurality of first sub-electrode lines as a metal mesh around the first electrode line; and (d) forming a first optical transparent adhesive layer.

### BRIEF DESCRIPTION OF THE DRAWINGS

FIGS. 1 and 2 are exemplary views showing examples of an electronic device to which the present invention can be applied.
FIGS. 3 to 7 are exemplary views showing a touch sense structure of an electronic device according to an embodiment of the present invention.
FIG. 8 is an exemplary view showing an electrode pattern structure for preventing a Moire phenomenon.
FIGS. 9 to 11 are exemplary views showing an example of a cross structure forming a first electrode line and a second electrode line.
FIGS. 12 and 13 are exemplary views showing a touch sense structure of an electric device according to an embodiment of the present invention.
FIG. 14 is a flowchart illustrating a method of forming an electrode in an electronic device according to an embodiment of the present invention.
FIG. 15 is an exemplary view showing a structure for recognizing a fingerprint through a touch sense structure of an electric device according to an embodiment of the present invention.
FIGS. 16a to 16j are exemplary views showing a touch sense structure of an electric device which can be created by combining electrode layers and optical transparent layers in the touch sense structure of an electric device according to an embodiment of the present invention.

### DESCRIPTION OF SYMBOLS

### DETAILED DESCRIPTION OF THE PREFERRED EMBODIMENT

Hereinafter, 'a touch sense structure of an electronic device, the electronic device and a method of forming an electrode in the electronic device' according to the present invention will be described in detail with reference to accompanying drawings. The disclosed embodiments are provided to enable those skilled in the art to easily understand the scope of the present invention, and the present invention is not limited by such embodiments. Moreover, matters illustrated in the drawings are schematized in order to describe or explain the embodiments of the present invention more easily, and hence, may be different from forms embodied actually.

Meanwhile, the constitutional components expressed below are merely examples for implementing the present invention. Accordingly, other components may be used in other implementations of the present invention without departing from the spirit and scope of the present invention. In addition, although each component can be implemented only in a pure hardware or software configuration, it also can be implemented by combining various hardware or software configurations performing the same function. In addition, two or more components may be implemented together by one piece of hardware or software.

In addition, the expression of 'including' an element is an expression of an 'open type' which merely refers to existence of a corresponding component, and it should not be construed as precluding additional components. In addition, the expression such as 'a first, a second, a third' or the like is used only for the purpose of distinguishing a plurality of configurations and do not limit the sequences or other features of the configurations.

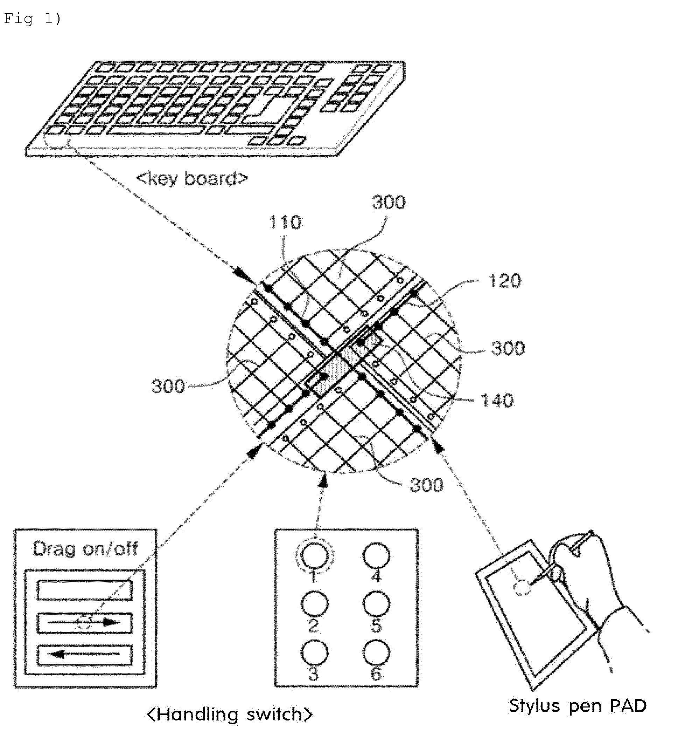

A touch sense structure of an electronic device according to an embodiment of the present invention described hereinafter can be applied to a variety of electronic devices. For example, the touch sense structure can be applied to electronic devices such as a keyboard, a mouse, a remote controller, a switch body, a handling device of an electronic product, various buttons, a washing machine, a vehicle, an airplane, office equipment and the like having a surface of an opaque material and also can be applied to a variety of display devices of a monitor, a TV, a digital picture frame, a tablet PC, a laptop PC, an all-in-one PC and the like having a surface of a transparent material. In addition, other than these examples, the touch sense structure of an electronic device according to an embodiment of the present invention can be applied to a variety of electronic devices which need sensing of a touch input. Hereinafter, the touch sense structure of an electronic device according to an embodiment of the present invention will be described with reference to FIGS. 1 to 13.

Referring to FIGS. 1 to 3, a touch sense structure of an electronic device according to an embodiment of the present invention may include a first layer 101 formed of an insulation material, a first electrode line 110 formed on one side of the first layer, a second electrode line 120 formed on a side the same as that of the first electrode line to form a cross structure while being electrically separated from the first electrode line, and first sub-electrode lines 300A and 300C and second sub-electrode lines 300B and 300D formed in an area partitioned by the first electrode line and the second electrode line.

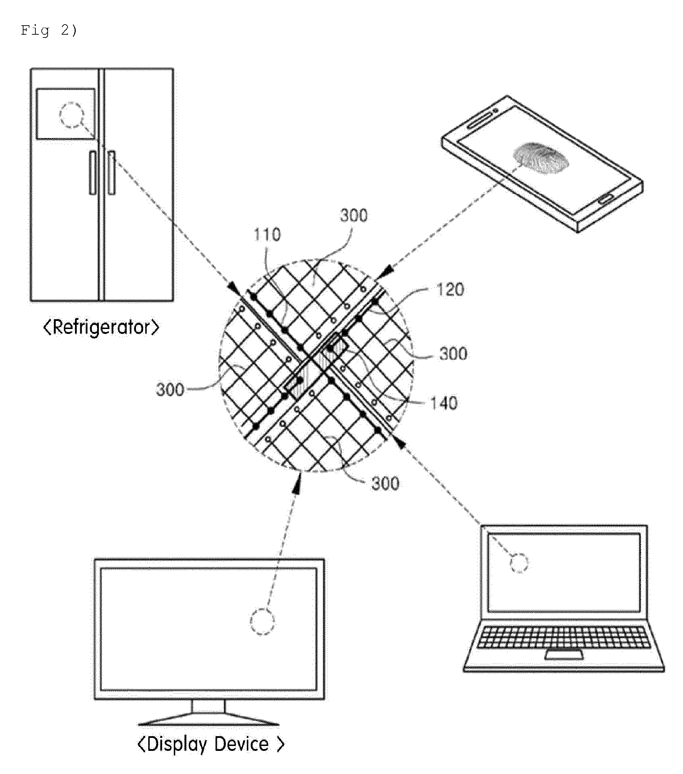

Such a touch sense structure of an electronic device can be implemented on one side of various electronic devices as described above, and, for example, the touch sense structure can be implemented on one side of the body of a keyboard as shown in the upper portion of FIG. 1, on one side of the body of various switches as shown in the lower portion of FIG. 1, on one side of the body of a refrigerator as shown in the upper portion of FIG. 2, or on one side of a display device as shown in the lower portion of FIG. 2. In addition, other than these examples, the touch sense structure of an electronic device can be implemented on one side of various electronic devices. On the other hand, here, the one side of an electronic device may be an outer side or an inner side of the electronic device.

The first layer 101 is a configuration for performing a function as a substrate layer on which the first electrode line 110, the second electrode line 120, the first sub-electrode lines 300A and 300C and the second sub-electrode lines 300B and 300D are formed. Although the first layer 101 may be a layer newly formed on one side of an electronic device, it can be a one side itself of the electronic device according to embodiments.

In addition, the first layer 101 is preferably formed of an insulation material, and it can be formed of a transparent material or an opaque material according to an applied electronic device. For example, the first layer 101 may be formed of an 'insulating transparent material' such as glass, macromolecular polymer (PET, PEN or the like), other transparent films, other transparent plastic, other transparent acryl or the like or may be formed of an 'insulating opaque material' such as opaque plastic, opaque macromolecular polymer, opaque acryl or the like.

The first electrode line 110 is a configuration for implementing a sensor electrode for recognizing a touch, which is formed of a conductive material. For example, the first electrode line 110 may be formed of gold, silver, titanium, copper, nickel, chrome or an alloy of any one of these or may be formed of a light transmitting conductive mixture such as ITO, Ag-Nanowire or the like.

The second electrode line 120 is a configuration for implementing a sensor electrode for recognizing a touch together with the first electrode line 110, which is formed of a conductive material like the first electrode line 110. Specifically, the second electrode line 120 may be also formed of gold, silver, titanium, copper, nickel, chrome or an alloy of any one of these or may be formed of a light transmitting conductive mixture such as ITO, Ag-Nanowire or the like.

Particularly, the first electrode line, the second electrode line and the sub-electrode lines are preferably configured in the form of a metal mesh. If a touch screen is manufactured in the form of a metal mesh, it will have various advantages such as a simple manufacturing process, a high transmittance (85 per cents or more), a low price, a low resistance, versatility for being used in a large TV or the like compared with existing indium oxide (ITO) by using one-time sputtering or a nano print method.

In manufacturing a touch screen, although the touch screen of up to 10 inches or 15 inches can be manufactured using Indium Tin Oxide (ITO) or a silver nanowire, a large touch screen over 30 inches can be manufactured if a metal mesh method is used. However, the metal mesh method has a problem of reflecting natural light, and a Moire phenomenon of generating optical interference may occur according to a light emitting pattern of a light emitting unit.

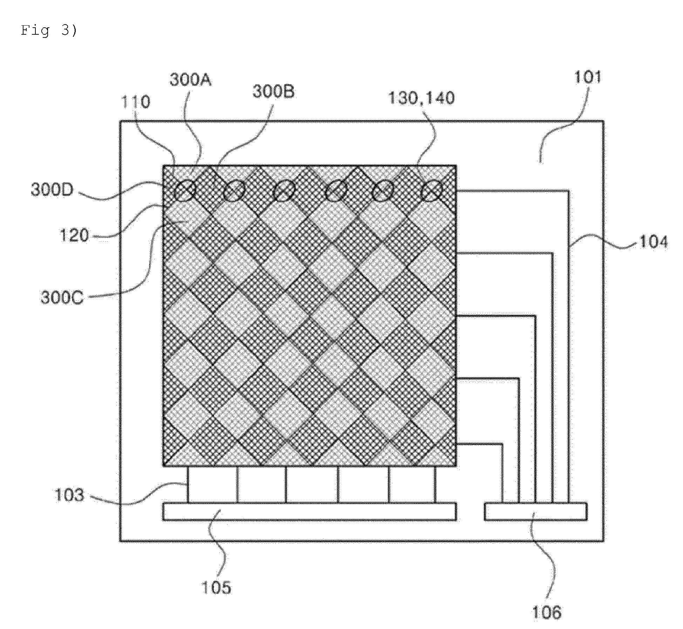

Seeing FIGS. 3 to 7, the touch sense structure of an electronic device according to an embodiment of the present invention includes a first layer formed of an insulation material, a first electrode line formed as a metal mesh on one side of the first layer, a plurality of first sub-electrode lines formed as a metal mesh around the first electrode line, a second electrode line formed as a metal mesh on a side the same as that of the first electrode line to form a cross structure while being electrically separated from the first electrode line, and a plurality of second sub-electrode lines formed as a metal mesh around the second electrode line, and the plurality of sub-electrode lines may be formed in a plurality of areas partitioned by the first electrode line and the second electrode line.

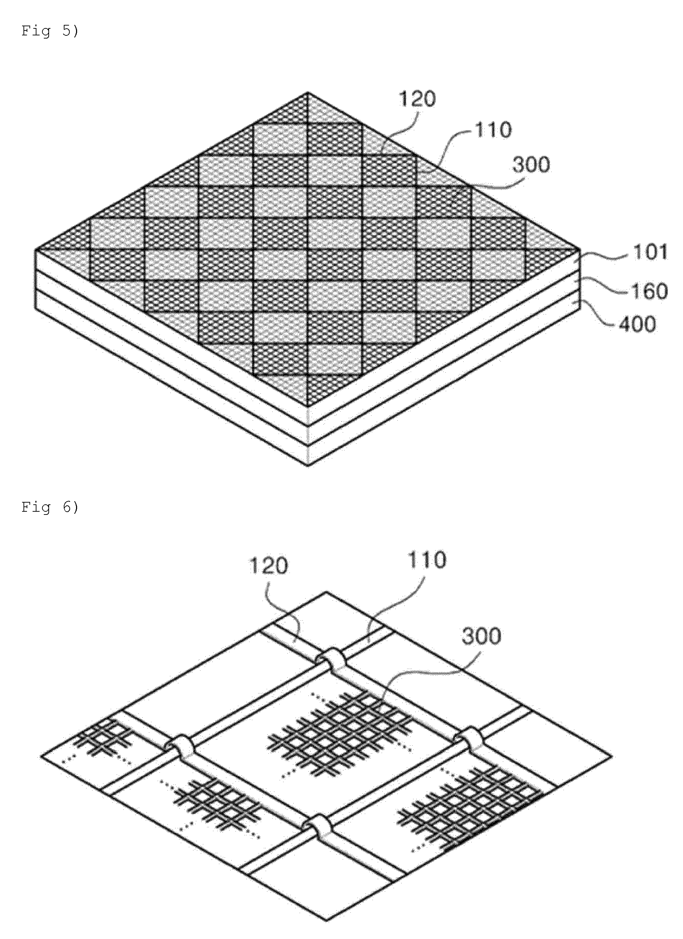

FIGS. 5 to 7 are views showing intersections of the first electrode line and the second electrode line and a control configuration of a touch sense structure in the touch sense structure of an electronic device.

The first electrode line 110 and the second electrode line 120 are preferably formed on the same one side of the first layer 101 and preferably form a cross structure while being electrically separated from each other. In this case, a discontinuation area for electrically separating the first electrode line 110 and the second electrode line 120 is preferably formed at a cross point where the first electrode line 110 and the second electrode line 120 cross each other. In addition, the discontinuation area is preferably formed such that any one of the first electrode line 110 and the second electrode line 120 is electrically connected through a connection pattern after being discontinued, and the other electrode line passes through the discontinuation area in a state not being discontinued. It is since that the first electrode line 110 and the second electrode line 120 should be formed in such a structure to transfer a signal while being electrically independent from each other although the first electrode line 110 and the second electrode line 120 are formed together on the same side of the first layer 101.

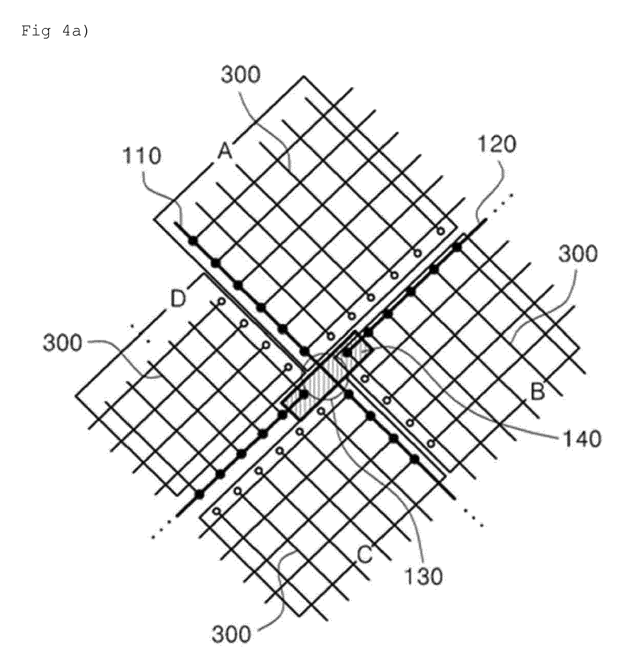

Referring to FIGS. 4a to 6, a specific example of the cross structure can be observed. In the example shown in FIGS. 4a to 6, a discontinuation area is formed such that the second electrode line 120 is discontinued at the cross point and the first electrode line 110 passes through the cross point. In this case, the discontinued second electrode lines 120 need to be electrically connected to each other, and 1) in the example shown in FIG. 4a, the discontinued second electrode lines 120 are connected to each other using a thin film type connection pattern 140 of a conductive material. Specifically, while being electrically separated from the first electrode line, the discontinued second electrode lines 120 are connected to each other using the thin film type connection pattern 140 electrically separated from the first electrode line 110 by the insulation layer 130. 2) In addition, in the example shown in FIG. 6, the discontinued second electrode lines 120 are connected to each other using an arch type connection pattern 140. Specifically, while being electrically separated from the first electrode line 110, the discontinued second electrode lines 120 are connected to each other using the arch type connection pattern 140 configured in the form of creating a step with respect to the first electrode line 110.

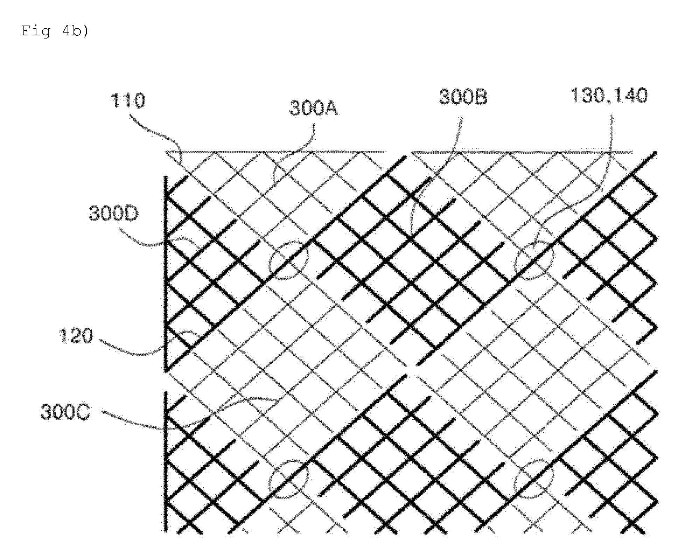

Referring to FIGS. 3 and 4b, an example of a touch sense structure of an electronic device shown on a touch screen can be observed. At this point, a plurality of areas is created by the first electrode line 110 and the second electrode line 120, and a plurality of sub-electrode lines 300 is formed in the areas, and the sub-electrode lines 300 are configured of the first sub-electrode lines 300A and 300C and the second sub-electrode lines 300B and 300D. In addition, as is showing sub-electrode lines in each area in different colors, the sub-electrode lines formed in the same area among the plurality of areas are connected only to any one of the first electrode line and the second electrode line (only sub-electrode lines of the same color exist in one area), the sub-electrode lines formed in the areas facing each other among the plurality of areas are connected only to an electrode line of the same type, and sub-electrode lines formed in the adjacent areas among the plurality of areas are connected to electrode lines of different types (sub-electrode lines of different colors are connected in the adjacent areas, and sub-electrode lines of the same color are connected in the areas facing each other).

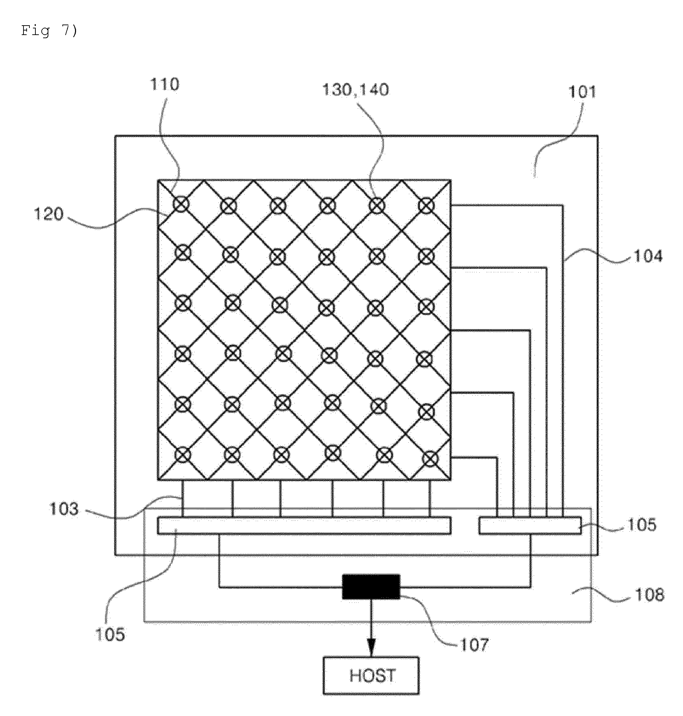

Referring to FIG. 7, the touch sense structure of an electronic device may include a touch controller connected to the first electrode line and the second electrode line to control a touch signal. The first electrode line and the second electrode line are electrically insulated through an insulation layer and an insulation pattern and can be integratedly controlled through the touch controller.

The touch controller controls touch signals transmitted by touches of the first electrode line, the second electrode line and the sub-electrode lines and may sense a degree of each touch according to the position and intensity of the touch signal. At this point, when the first electrode line, the second electrode line and the sub-electrode lines sense a touch signal for a predetermined time period or more, the touch controller recognizes that a user uses a fingerprint recognition device and displays a notification window inquiring whether or not to use a fingerprint recognition program, and if the user inputs a command for using the fingerprint recognition program with an intention to use the fingerprint recognition program, a fingerprint pattern of the user can be confirmed by analyzing the touch signal recognition patterns of a plurality of first electrode lines, a plurality of second electrode lines, and a plurality of sub-electrode lines.

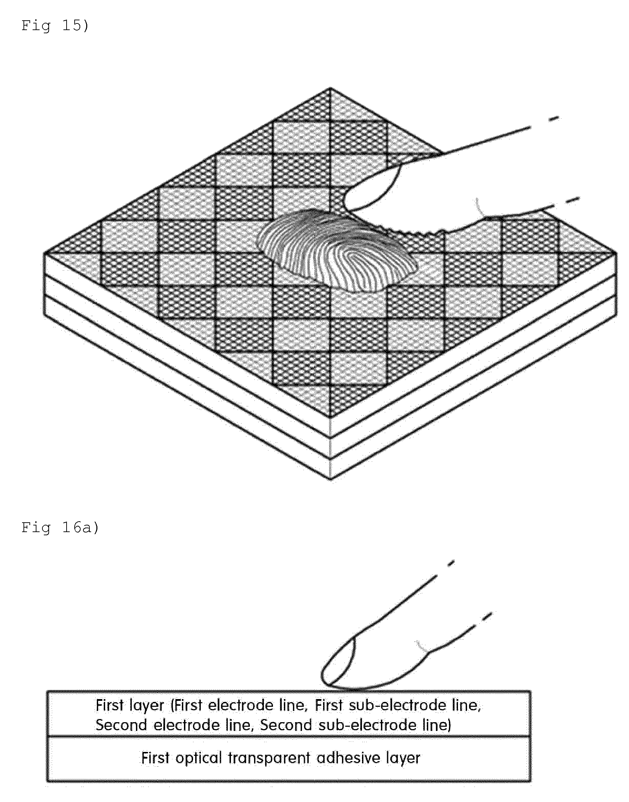

Referring to FIG. 15, the touch sense structure of the present invention is a touch sense structure using a metal mesh, which can implement a micro pattern having a narrow width, and may recognize a fingerprint by densely implementing the gaps between the lines. Currently existing fingerprint recognition is a technique for providing a separate fingerprint recognition device, not a touch screen itself, and recognizing a fingerprint through the fingerprint recognition device, and the fingerprint recognition device should be configured while reducing a separate additional configuration other than a display or reducing a display area, and it is a method of recognizing a fingerprint by comparing the fingerprint with an previously set image or picture of a finger. However, the touch sense structure of the present invention may determine whether or not a fingerprint is a preset fingerprint and whether or not to use the fingerprint recognition program by analyzing patterns of a plurality of electrode lines and a plurality of sub-electrode lines contacted with the fingerprint of a touched finger.

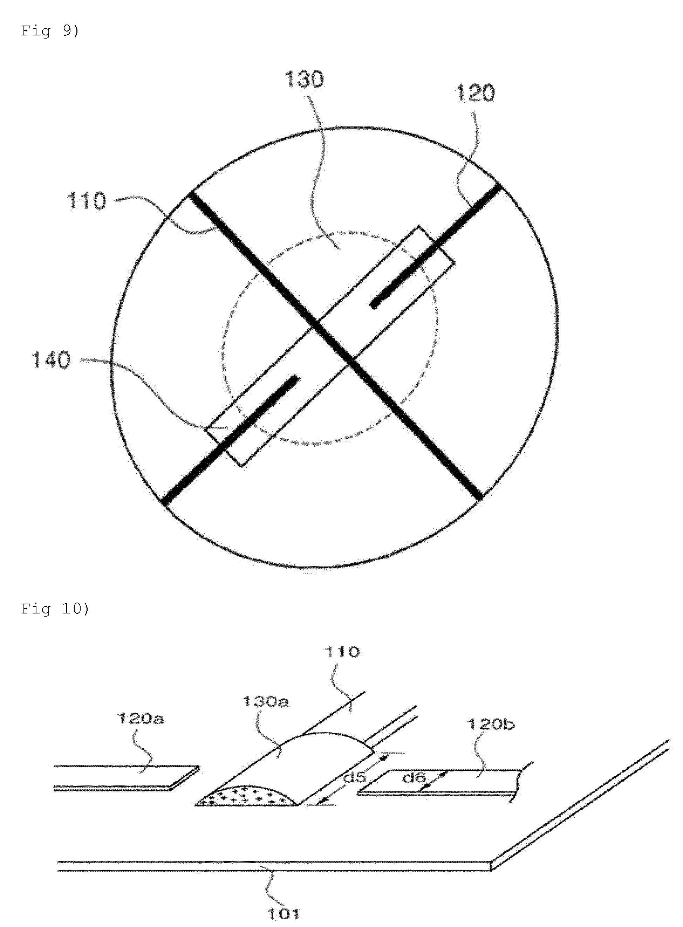

Referring to FIGS. 9 to 11, an additional example of the cross structure can be observed. In the example shown in FIGS. 9 to 11, an insulation layer for insulating a connection pattern for connecting the electrode lines discontinued in the discontinuation area to each other from the electrode lines non-discontinued in the discontinuation area can be formed in a variety of forms, and the connection pattern and the non-discontinued electrode lines can be electrically separated further clearly by the insulation layer. Here, the insulation layer may include at least one of thermosetting polymer resin, UV curable polymer resin and catalyst curable polymer resin selected from a group configured of a silicon base, a melamine base, an acryl base, a urethane base or an alkyl base. In addition, the insulation layer may include at least one item selected from a group configured of titanium dioxide, silicon dioxide or silicon nitride. In addition, the insulation layer may include an insulation pattern applied in the length direction of the electrode line, an insulation pattern applied in a circular shape, an insulation pattern applied in an oval shape, an insulation pattern applied in an arch shape, and an insulation pattern formed like a film, and other than these insulation patterns, insulation patterns of various shapes can be included. In addition, the connection pattern can be formed of a conductive material, and, for example, it can be formed of gold, silver, titanium, copper, nickel, chrome or an alloy of any one of these or may be formed of a light transmitting conductive mixture such as ITO, Ag-Nanowire or the like.

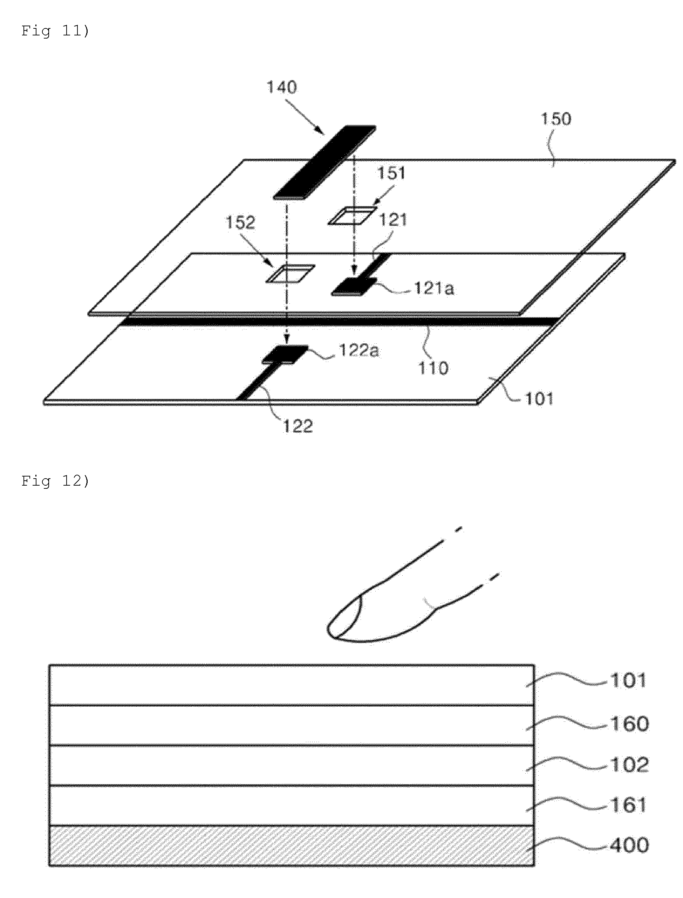

Referring to FIG. 9, an example of a circular insulation layer 130 formed between the connection pattern 140 and the non-discontinued first electrode line 110 can be observed. In this case, the diameter of the insulation layer 130 is preferably formed to be larger than the width of the first electrode line 110. In addition, referring to FIG. 10, while the insulation layer 130a is formed along the length direction of the first electrode line 110, it can be formed in a shape of covering only the area where the first electrode line 110 is formed. In this case, since the insulation layer 130a is formed as a minimized area, optical transmittance can be improved when the first layer 101 is formed of a transparent material. In addition, referring to FIG. 11, an example of the insulation layer 150 configured in the form of a film in which via holes 151 and 152 are formed can be observed. In this case, electrode pads 121a and 122a can be formed at the ends of the discontinued second electrode lines 121 and 122, and the electrode pads 121 a and 122a can be connected to each other through the connection pattern 140 formed on the top of the via holes 151 and 152 and the insulation layer 150 while being electrically separated from the first electrode line 110.

Referring to FIGS. 5 and 6, the sub-electrode line 300 is an auxiliary electrode formed in an area partitioned by the first electrode line 110 and the second electrode line 120. Specifically, the sub-electrode line 300 is a configuration in which first sub-electrode lines 300A and 300C and second sub-electrode lines 300B and 300D are formed on a plurality of areas A, B, C and D partitioned by the cross structure formed by the first electrode line 110 and the second electrode line 120 as shown in FIGS. 3, 4a and 4b. Such sub-electrode lines are preferably formed to be connected only to any one of the first electrode line 110 and the second electrode line 120. In addition, when a plurality of sub-electrode lines is formed on a plurality of areas partitioned by the first electrode line 110 and the second electrode line 120, the sub-electrode lines 300 formed in the same area among the plurality of areas are preferably connected only to an electrode line of the same type. It is since that owing to the structural characteristics of the sub-electrode lines 300, electric charges can be concentrated on a specific electrode line, and thus sensing sensitivity is enhanced, and position information of a touch point can be sensed further precisely.

Describing a specific example with reference to FIGS. 3, 4a and 4b, a plurality of areas A, B, C and D is formed by the cross structure of the first electrode line 110 and the second electrode line 120, and when a plurality of sub-electrode lines 300 is formed in each area, all the first sub-electrode lines 300A formed in area A are preferably formed to be connected only to the first electrode line 110 and discontinued from the second electrode line 120, and all the second sub-electrode lines 300B formed in area B are preferably formed to be connected only to the second electrode line 120 and discontinued from the first electrode line 110. In addition, all the first sub-electrode lines 300C formed in area C are preferably formed to be connected only to the first electrode line 110 and discontinued from the second electrode line 120, and all the second sub-electrode lines 300D formed in area D are preferably formed to be connected only to the second electrode line 120 and discontinued from the first electrode line 110. In addition, when the sub-electrode lines 300 are formed on a plurality of areas partitioned by the first electrode line 110 and the second electrode line 120, the sub-electrode lines 300 formed in the areas facing each other are preferably connected only to one electrode line of the same type. It is since that owing to the structural characteristics of the sub-electrode lines 300, electric charges are concentrated on a specific electrode line in a form having a directionality, and thus performance of processing the sensing information can be further improved.

Describing a specific example with reference to FIGS. 3, 4a and 4b, a plurality of areas A, B, C and D is formed by the cross structure of the first electrode line 110 and the second electrode line 120, and when sub-electrode lines 300 are formed in each area, it preferable that the sub-electrode lines 300 formed in area A and area C facing each other are connected only to the same first electrode line 110, and the sub-electrode lines 300 formed in area B and area D facing each other are connected only to the same second electrode line 120.

Meanwhile, when the sub-electrode line 300 is formed in plurality, they are preferably formed in a mesh structure. It is since that reliability of touch sense can be improved through the mesh structure. In addition, the sub-electrode lines 300 should be formed to be thin to improve optical transmittance when the first layer 101 is formed of a transparent material, and, for example, they can be formed to have a thickness of 0.05 to 10µm and a width of 0.5 to 5µm. In addition, the sub-electrode lines are preferably formed in a mesh structure at intervals of 100 to 2,000µm. In addition, the first electrode line 110, the second electrode line 120 and the third electrode line 125 may be formed in an appropriate shape among a diamond shape, a square shape and a rectangular shape based on the shape of the pattern of the light emitting unit, and the first electrode line, the second electrode line, the third electrode line, the first sub-electrode lines, the second sub-electrode lines, and the third sub-electrode lines are preferably formed to have a width of 5µm or less at maximum. In addition, the width of a line formed as an electrode can be adjusted by setting a different manufacturing process and a different process condition when the electrode is formed, and an appropriate width of an electrode line may be set diversely such as 3 µm, 2.2 µm, 1.4 µm, 1.2 µm or the like according to the purpose of using the touch screen.

If the width of an electrode line is wide, the touch signal transfer speed is decreased as the electrical resistance is increased, and a pattern displayed on the display screen of the light emitting unit can be observed with naked eyes. Accordingly, the smaller the width of the electrode line, the line is invisible to the eyes of a user, and thus a further clear screen can be provided since the optical transmittance is enhanced. In addition, the sub-electrode lines 300 are also formed of a conductive material, and, for example, they can be formed of gold, silver, titanium, copper, nickel, chrome or an alloy of any one of these or may be formed of a light transmitting conductive mixture such as ITO, Ag-Nanowire or the like. In addition, the sub-electrode lines 300 can be formed of a material the same as or different from that of the first electrode line 110 and the second electrode line 120.

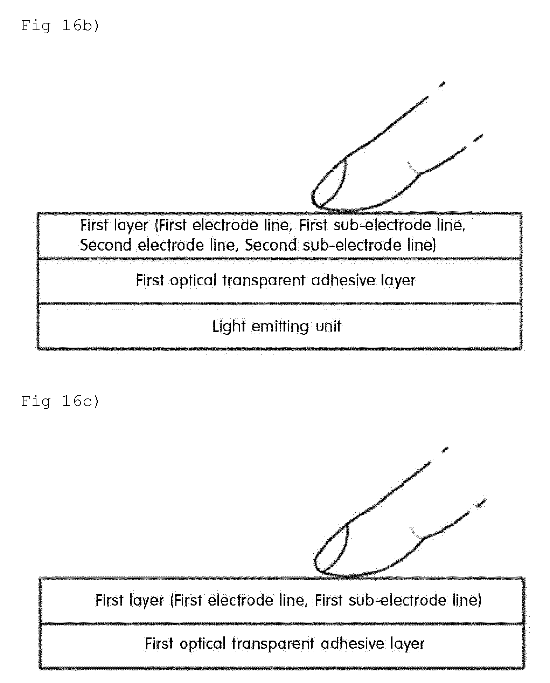

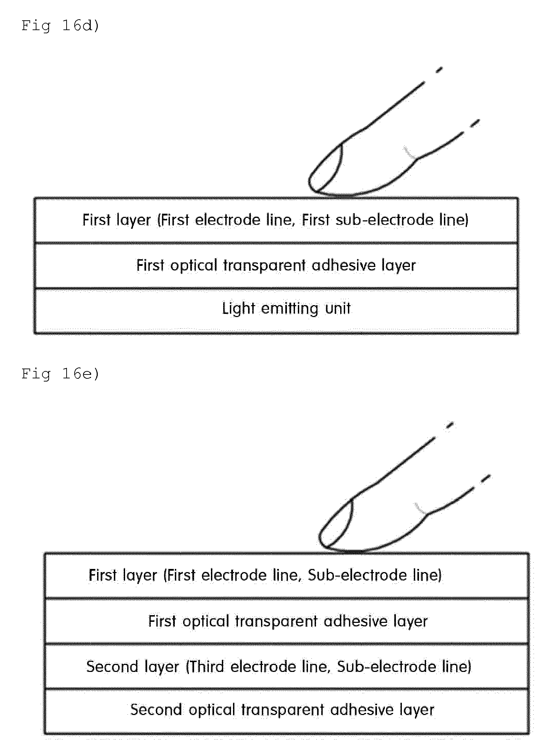

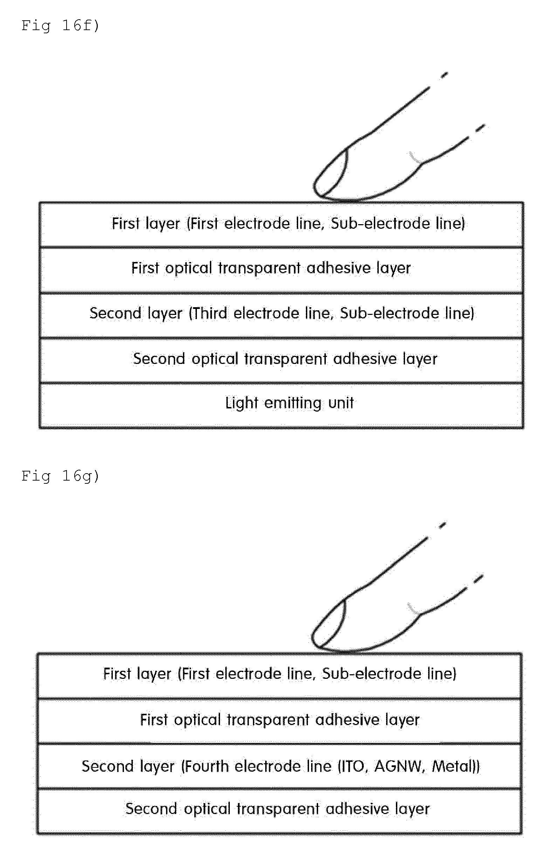

FIGS. 16a to 16j are views showing various forms of applying the touch sense structure of the present invention and show cross-sectional views of the touch sense structure of an electronic device when the electronic device is touched. A first layer 101 is formed at a point where a finger of a user is touched, and a first electrode line, first sub-electrode lines, a second electrode line and second sub-electrode lines are formed on the top or bottom of the first layer, and a first optical transparent adhesive layer 160 can be inserted between the first layer and a light emitting unit 400 to attach the first layer and the light emitting unit 400. At this point, the optical transparent adhesive layer may attach the first layer and an adhesive material on the bottom, and any material which can attach the light emitting unit and the first layer 101, such as Optically Clear Adhesive (OCA), Optically Clear Resin (OCR) or the like, can be used. In addition, the adhesive material on the bottom attached to the first layer 101 using the optical transparent adhesive layer can be another second or third layer and directly attached to the light emitting unit of an electronic device. In addition, the optical transparent adhesive layer may be formed as a structure attached to the adhesive material on the bottom (the second layer or the light emitting unit), and a touch screen structure may be created to be formed of only the first layer 101 and the optical transparent adhesive layer without any other adhesive on the bottom.

On the other hand, referring to FIGS. 3 to 11, in a structure forming an electrode by using one layer and one light emitting unit, the first line electrode 110 and the second electrode line 120 are preferably formed in plurality across the entire first layer 101, and it is preferable to form touch sense areas across the entire first layer 101 by repeatedly forming a plurality of cross structures. In addition, the first electrode line 110, the second electrode line 120, the sub-electrode lines 300 and the connection pattern 140 described above may be formed in a variety of methods including silk screen print, chemical vapor deposition, vacuum deposition, plasma deposition, sputtering, ion beam deposition, photolithography, Gravure print, inkjet, offset, imprint and the like.

### [One-Glass Solution]

The present invention may implement a one-glass solution using a metal mesh structure (a technique utilizing only a single glass layer) by forming a single layer 101 using glass and forming the first electrode line 110, the second electrode line 120 and the sub-electrode lines 300 using a metal (gold, silver, titanium, copper, nickel, chrome or an alloy of any one of these). Conventionally, only a one-glass solution technique using an ITO electrode exists, and a one-glass solution technique using a metal mesh as a member of an electrode pattern structure capable of implementing sufficient touch sensing sensitivity does not exist, and the present invention can implement a one-glass solution using a metal mesh by using the electrode pattern structure described above. Accordingly, unlike the conventional one-glass solution limited to an Indium Tin Oxide (ITO) electrode, an electrode pattern structure having a low electrical resistance can be implemented, and thus it can be easily applied to one side of an electronic device of a large area.

### [Moire prevention technique]

The present invention may be also implemented in the form of configuring a touch sense structure on a light emitting unit. (For reference, here, the light emitting unit means a configuration which emits light and may include various light emitting elements such as an LCD, an LED and other illumination devices.) For example, the present invention may be implemented in the form of configuring a touch sense structure on a light emitting unit of a display panel type or on a light emitting unit of a backlight panel type. In this case, the first layer 101 is preferably configured in the form of a transparent material for transmitting light.

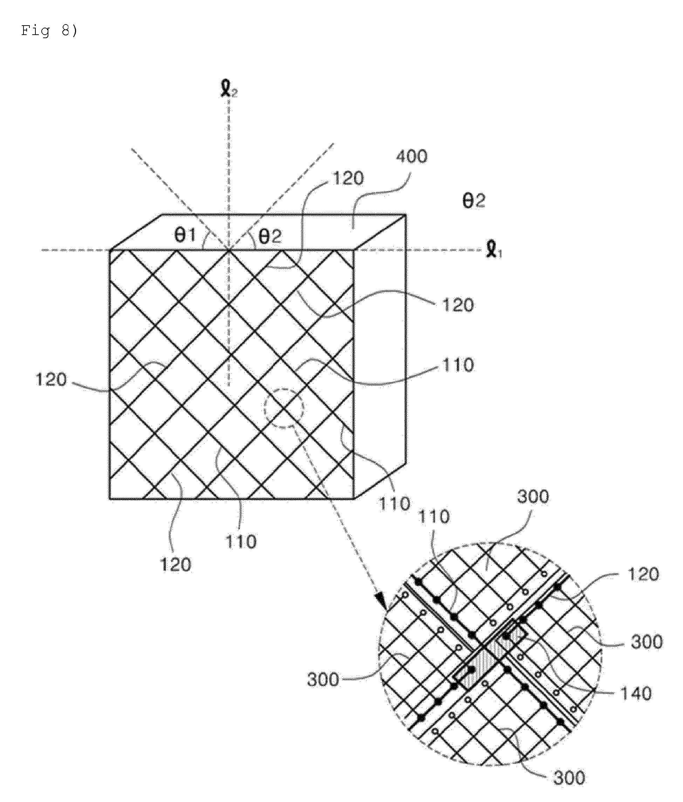

Meanwhile, when the touch sense structure is formed on a light emitting unit, a Moire phenomenon caused by optical interference may occur according to the electrode pattern (the first electrode line, the second electrode line, the sub-electrode lines and the like) included in the touch sense structure and the light emitting pattern of the light emitting unit. Specifically, if the shape of a mesh or a lattice included in the electrode pattern is overlapped with the light emitting pattern of the light emitting device, an interference pattern shaped in a pattern of drawing circles like growth rings of a tree or shaped in a wave pattern may occur (the Moire phenomenon occurs). The first electrode line 110 and the second electrode line 120 may be formed in a variety of shapes such as a diamond shape, a square shape, a rectangular shape and the like based on the shape of the pattern of the light emitting unit and are formed in a shape declined by a predetermined angle compared with the outer rim, and thus the present invention may prevent the Moire phenomenon through such a structure. In this case, the first electrode line 110 or the second electrode line 120 preferably forms an acute angle of 25 to 65 degrees with respect to the outer rim of the light emitting unit. Specifically, as shown in FIG. 8, the electrode pattern is preferably formed such that the acute angle θ1 formed between the first electrode line 110 and the outer rim ℓ1 of the light emitting unit or the acute angle θ2 formed between the second electrode line 120 and the outer rim ℓ1 of the light emitting unit is 25 to 65 degrees, since the Moire phenomenon can be minimized through such structural characteristics. In addition, when the touch sense structure includes a plurality of first electrode lines 110 and a plurality of second electrode lines 120, a line connecting a plurality of cross points formed by the plurality of first electrode lines 110 and the plurality of second electrode lines 120 is preferably formed in a shape perpendicular to the outer rim of the light emitting unit or declined to the left or right within a range of 0 to 20 degrees from a perpendicular line. Specifically, as shown in FIG. 8, the line ℓ2 connecting a plurality of cross points is preferably formed in a shape perpendicular to the outer rim ℓ1 of the light emitting unit or declined to the left or right within a range of 0 to 20 degrees from a perpendicular line, since the Moire phenomenon can be minimized through such structural characteristics.

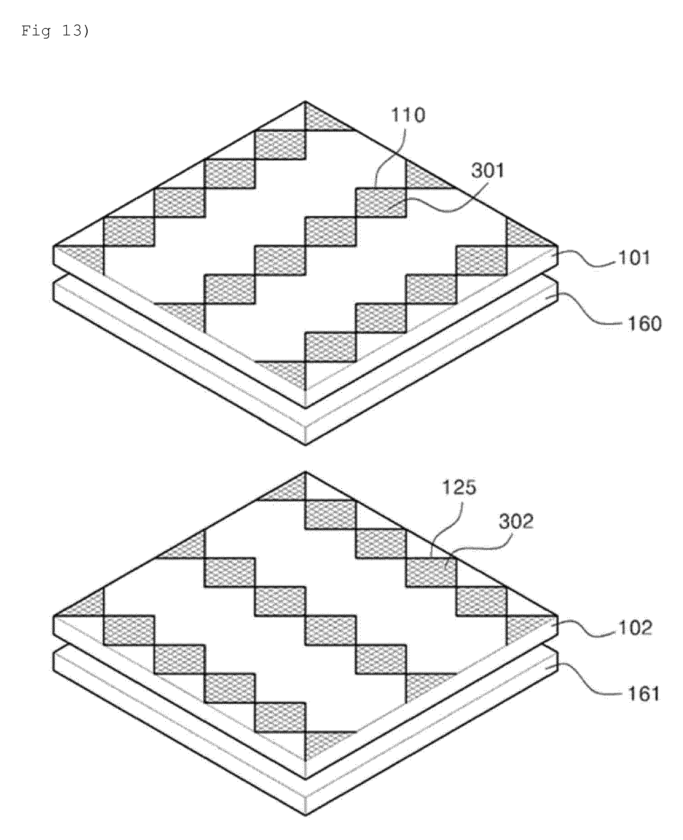

A touch sense structure of an electronic device using two layers will be described with reference to FIGS. 12 and 13.

Referring to FIGS. 12 and 13, a touch sense structure of an electronic device according to an embodiment of the present invention may include a first layer 101 formed of an insulation material, a first electrode line 110 formed on one side of the first layer, a plurality of first sub-electrode lines 301 formed as a metal mesh around the first electrode line, a second layer 102 formed of an insulation material, a third electrode line 125 formed as a metal mesh on one side of the second layer, a plurality of third sub-electrode lines 302 formed as a metal mesh around the third electrode line, and first and second optical transparent adhesive layers 160 and 161. At this point, the first and second optical transparent adhesive layers may include Optical Clear Resin (OCR) or Optical Clear Adhesive (OCA).

Compared with the configuration of FIGS. 3 to 7, since the touch sense structure of FIGS. 3 to 7 is equipped with all of the first electrode line, the second electrode line, the first sub-electrode lines and the second sub-electrode lines on one layer, a configuration for electrically discontinuing the first and second electrode lines using an insulation layer and a bridge electrode is needed. However, the touch sense structure of FIGS. 12 and 13 uses two layers, in which the first layer senses a touch signal through the first electrode line 110 and the first sub-electrode line 301, and the second layer senses a touch signal through the third electrode line 125 and the third sub-electrode line 302, and the first layer and the second layer are electrically insulated through the first optical transparent adhesive layer 160, and thus the same effect as using one layer can be induced without separately providing a bridge electrode and an insulation layer. Accordingly, since the unnecessary process of separately manufacturing a three-dimensional bridge and an insulation layer together with the first electrode line and the sub-electrode lines is removed, throughput can be enhanced at a low price.

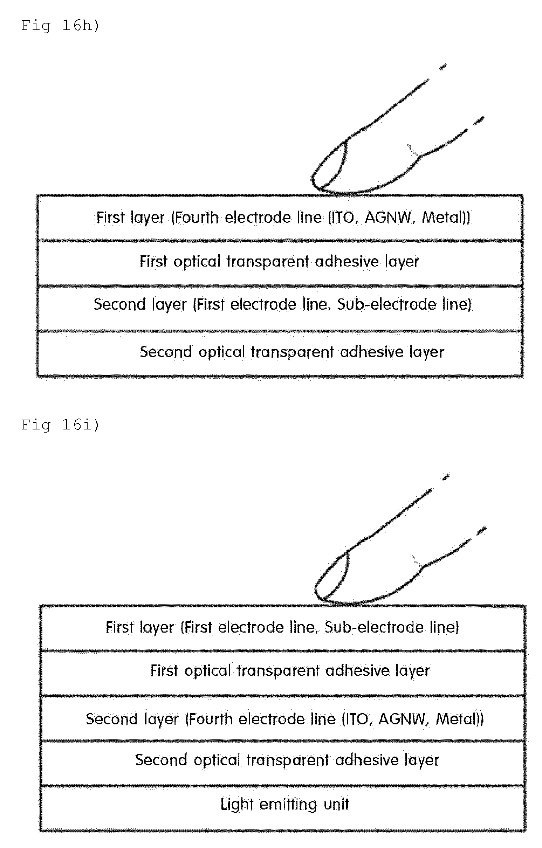

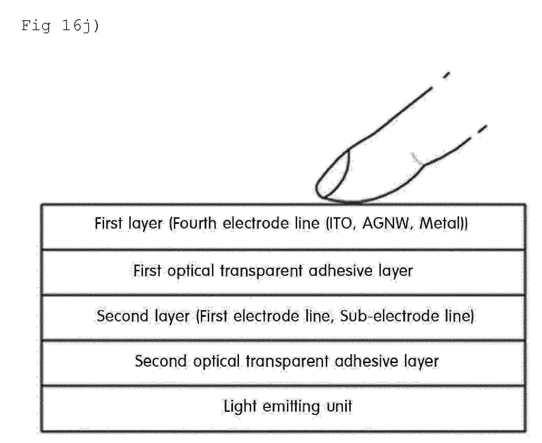

Meanwhile, referring to FIGS. 16g, 16h, 16i and 16j, a touch sense structure of an electronic device according to an embodiment of the present invention may include a first layer formed of an insulation material, a first electrode line formed on one side of the first layer, a plurality of first sub-electrode lines formed as a metal mesh around the first electrode line, a second layer formed of an insulation material, a fourth electrode line formed as an electrode including one or more of Indium Tin Oxide (ITO) and a sliver nanowire on one side of the second layer, and a second optical transparent adhesive layer. When the touch sense structure is configured of two or more layers, electrodes are formed on one of the layers using a metal mesh, and the other layer is formed as an electrode layer by using Indium Tin Oxide (ITO), a sliver nanowire or the like, and this can be used as a touch screen.

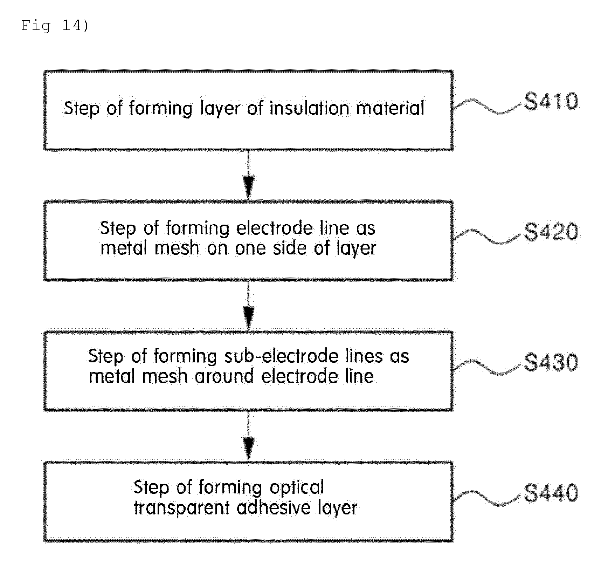

Hereinafter, a method of forming an electrode in an electronic device according to an embodiment of the present invention will be described with reference to FIG. 14.

Referring to FIG. 14, a method of forming an electrode in an electronic device according to an embodiment of the present invention may first include a step of forming a layer of an insulation material (step S410).

In addition, the method of forming an electrode in an electronic device according to an embodiment of the present invention may include, after step S410, a step of forming an electrode line as a metal mesh on one side of the layer (step S420).

In addition, the method of forming an electrode in an electronic device according to an embodiment of the present invention may include, after step S420, a step of forming a subelectrode line as a metal mesh around the electrode line (step S430).

In addition, the method of forming an electrode in an electronic device according to an embodiment of the present invention may include, after step S430, a step of forming an optical transparent adhesive layer (step S440). Here, the electrode line and the sub-electrode line may be formed in a variety of methods including silk screen print, chemical vapor deposition, vacuum deposition, plasma deposition, sputtering, ion beam deposition, photolithography, Gravure print, inkjet, offset, imprint and the like.

According to the present invention, a touch sense structure which can implement a very high resolution of touch input sensing can be provided while maintaining thickness of an electronic device to be slim.

In addition, sensing sensitivity can be improved and position information of a touch point can be further precisely sensed according to the structural characteristics of the subelectrode lines.

In addition, since the touch sense structure is formed of a transparent material in the form of combining a light emitting unit, an electrode pattern structure capable of preventing the Moire phenomenon can be implemented.

In addition, since a one-glass solution using a metal mesh structure can be implemented, the touch sense structure can be implemented in a form which can be applied also to one side of an electronic device of a large area.

In addition, since a plurality of electrode lines and sub-electrode lines can be implemented as a touch screen by using a micro pattern having a narrow width, the gaps between the lines can be densely implemented, and a fingerprint pattern of a user can be directly confirmed on the touch screen by analyzing touch signal recognition patterns of the electrode lines.

In addition, since the first electrode line does not directly contact with the third electrode line by implementing the first electrode line and the third electrode line on different layers, the same effect can be obtained although a bridge is not formed at the point where the insulation layer and the two electrodes meet each other.

In addition, since a dual layer is configured and indium tin oxide, a silver nanowire or the like used in an existing touch structure, as well as a metal mesh, is used as an electrode when electrodes included in the layers are configured, the touch sense structure can be implemented in combination with a general touch screen pattern.

The effects the present invention are not limited to the effects mentioned above, and various effects can be included within the scope apparent to those skilled in the art from the following descriptions.

Meanwhile, although the categories are different, the 'method of forming an electrode in an electronic device' according to an embodiment of the present invention described above may include technical characteristics practically the same as those of the 'touch sense structure of an electronic device' according to an embodiment of the present invention.

Accordingly, although it is not described in detail to avoid duplicate descriptions, the characteristics described above in relation to the 'touch sense structure of an electronic device' can be naturally applied by analogy to the 'method of forming an electrode in an electronic device' according to an embodiment of the present invention. In addition, conversely, the characteristics described above in relation to the 'method of forming an electrode in an electronic device' can be naturally applied by analogy to the 'touch sense structure of an electronic device'.

The embodiments of the present invention described above are disclosed for illustrative purposes, and the present invention is not to be restricted by the embodiments. In addition, those skilled in the art can make diverse changes and modifications within the spirit and scope of the present invention, and those changes and modifications should be regarded as being included within the scope of the present invention.

## Claims

1. A touch sense structure of an electronic device, the structure comprising:
a first layer formed of an insulation material;
a first electrode line formed as a metal mesh on one side of the first layer;
a plurality of first sub-electrode lines formed as a metal mesh around the first electrode line; and
a first optical transparent adhesive layer.

2. The touch sense structure according to claim 1, further comprising:
a second electrode line formed as a metal mesh on a side the same as that of the first electrode line to form a cross structure while being electrically separated from the first electrode line; and
a plurality of second sub-electrode lines formed as a metal mesh around the second electrode line, wherein the plurality of first sub-electrode lines and the plurality of second sub-electrode lines are formed in a plurality of areas partitioned by the first electrode line and the second electrode line.

3. The touch sense structure according to claim 2, wherein the first sub-electrode lines and the second sub-electrode lines formed in a same area among the plurality of areas are respectively connected only to any one of the first electrode line and the second electrode line, and the first sub-electrode lines and the second sub-electrode lines formed in areas facing each other among the plurality of areas are connected only to an electrode line of a same type.

4. The touch sense structure according to claim 2, wherein a discontinuation area for electrically separating the first electrode line and the second electrode line is formed at a cross point where the first electrode line and the second electrode line cross each other, and any one of the first electrode line and the second electrode line is connected through a connection pattern after being discontinued in the discontinuation area.

5. The touch sense structure according to claim 4, further comprising an insulation layer for insulating the electrode lines not discontinued from the connection pattern in the discontinuation area from each other.

6. The touch sense structure according to claim 5, wherein the insulation layer includes one or more of an insulation pattern applied in a length direction of the electrode line, an insulation pattern applied in a circular shape, an insulation pattern applied in an oval shape, an insulation pattern applied in an arch shape, an insulation pattern of a film type and a type of film formed with a via hole.

7. The touch sense structure according to claim 2, wherein the layer is formed of a transparent material to transmit light of the light emitting unit, and the first electrode line and the second electrode line are formed in a shape declined by a predetermined angle compared with an outer rim of the light emitting unit.

8. The touch sense structure according to claim 7, wherein an acute angle formed between the first electrode line or the second electrode line and the outer rim of the light emitting unit is 25 to 65 degrees.

9. The touch sense structure according to claim 7, wherein a plurality of first electrode lines and a plurality of second electrode lines are included, wherein a line connecting a plurality of cross points formed by the plurality of first electrode lines and the plurality of second electrode lines is formed in a shape perpendicular to the outer rim of the light emitting unit or declined within a range of 0 to 20 degrees from a perpendicular line.

10. The touch sense structure according to claim 2, wherein a shape of the first electrode line or the second electrode line includes one or more of a diamond shape, a square shape and a rectangular shape based on the shape of the pattern of the light emitting unit, and the first electrode line, the second electrode line, the first sub-electrode lines and the second sub-electrode lines are formed to have a width of 5µm or less.

11. The touch sense structure according to claim 2, further comprising a touch controller connected to the first electrode line and the second electrode line to control a touch signal.

12. The touch sense structure according to claim 11, wherein when the first electrode line, the second electrode line and the sub-electrode lines sense a touch signal for a predetermined time period or more, the touch controller recognizes that a user uses a fingerprint recognition device and displays a notification window inquiring whether or not to use a fingerprint recognition program.

13. The touch sense structure according to claim 12, wherein when a command for using the fingerprint recognition program is input, the touch controller confirms a fingerprint pattern of the user by analyzing touch signal recognition patterns of the plurality of first electrode lines, the plurality of second electrode lines, and the plurality of sub-electrode lines.

14. The touch sense structure according to claim 1, the structure comprising:
a second layer formed of an insulation material;
a third electrode line formed as a metal mesh on one side of the second layer;
a plurality of third sub-electrode lines formed as a metal mesh around the third electrode line; and
a second optical transparent adhesive layer.

15. The touch sense structure according to claim 14, wherein the first layer and the second layer are formed of a transparent material to transmit light of the light emitting unit, and the first electrode line and the third electrode line are formed in a shape declined by a predetermined angle compared with an outer rim of the light emitting unit.

16. The touch sense structure according to claim 15, wherein an acute angle formed between the first electrode line or the third electrode line and the outer rim of the light emitting unit is 25 to 65 degrees.

17. The touch sense structure according to claim 15, wherein the first electrode line and the third electrode line are included in plurality, wherein a line connecting a plurality of cross points formed by the plurality of first electrode lines and the plurality of third electrode lines is formed in a shape perpendicular to the outer rim of the light emitting unit or declined within a range of 0 to 20 degrees from a perpendicular line.

18. The touch sense structure according to claim 14, wherein a shape of the first electrode line or the third electrode line includes one or more of a diamond shape, a square shape and a rectangular shape based on a shape of a pattern of a light emitting unit, and the first electrode line, the third electrode line, the first sub-electrode lines and the third sub-electrode lines are formed to have a width of 5 µm or less.

19. The touch sense structure according to claim 14, further comprising a touch controller connected to the first electrode line and the third electrode line to control a touch signal.

20. The touch sense structure according to claim 19, wherein when the first electrode line, the third electrode line and the sub-electrode lines sense a touch signal for a predetermined time period or more, the touch controller recognizes that a user uses a fingerprint recognition device and displays a notification window inquiring whether or not to use a fingerprint recognition program.

21. The touch sense structure according to claim 20, wherein when a command for using the fingerprint recognition program is input, the touch controller confirms a fingerprint pattern of the user by analyzing touch signal recognition patterns of the plurality of first electrode lines, the plurality of third electrode lines, and the plurality of sub-electrode lines.

22. The touch sense structure according to claim 1, the structure comprising:
a second layer formed of an insulation material;
a fourth electrode line formed as an electrode including one or more of Indium Tin Oxide (ITO) and a sliver nanowire on one side of the second layer; and
a second optical transparent adhesive layer.

23. An electronic device comprising:
a first layer formed of an insulation material;
a first electrode line formed as a metal mesh on one side of the first layer;
a plurality of first sub-electrode lines formed as a metal mesh around the first electrode line; and
a first optical transparent adhesive layer.

24. A method of forming an electrode in an electronic device, the method comprising the steps of:
(a) forming a first layer of an insulation material;
(b) forming a first electrode line as a metal mesh on one side of the first layer;
(c) forming a plurality of first sub-electrode lines as a metal mesh around the first electrode line; and
(d) forming a first optical transparent adhesive layer.
